(19) Europäisches Patentamt
European Patent Office
Office européen des brevets

(11) **EP 2 515 155 B1**

(12) **FASCICULE DE BREVET EUROPEEN**

(45) Date de publication et mention de la délivrance du brevet:
**08.11.2017 Bulletin 2017/45**

(51) Int Cl.:
***G02B 26/08*** (2006.01) ***G02B 27/00*** (2006.01)

(21) Numéro de dépôt: **12164763.0**

(22) Date de dépôt: **19.04.2012**

(54) **DISPOSITIF DE CORRECTION D'AU MOINS UNE ABERRATION D'EVOLUTION CONNUE A MIROIR DEFORMABLE**

Vorrichtung zur Korrektion von mindestens einem Aberration mit bekannten Evolution mit verformbarem Spiegel

Device correcting at least one aberration with known evolution comprising a deformable mirror

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.04.2011 FR 1153390**

(43) Date de publication de la demande:
**24.10.2012 Bulletin 2012/43**

(73) Titulaire: **CENTRE NATIONAL D'ETUDES SPATIALES**
**75001 Paris (FR)**

(72) Inventeurs:
• **Laslandes, Marie**
**13388 Marseille (FR)**
• **Ferrari, Marc**
**13388 MARSEILLE (FR)**
• **Hugot, Emmanuel**
**13388 MARSEILLE (FR)**

(74) Mandataire: **Regimbeau**
**20, rue de Chazelles**
**75847 Paris Cedex 17 (FR)**

(56) Documents cités:
WO-A1-2009/097503     FR-A1- 2 923 301
US-A1- 2007 165 312     US-A1- 2007 229 993
US-A1- 2007 268 592

**Description**

DOMAINE TECHNIQUE GENERAL

L'invention concerne le domaine de l'optique active et plus particulièrement un dispositif pour corriger des aberrations dans un système optique au moyen d'un miroir déformable.

ETAT DE LA TECHNIQUE

En optique active, les miroirs actifs sont utilisés pour compenser les aberrations apparaissant dans un instrument optique et limitant ses performances. En effet, la qualité des images obtenues par un instrument optique est dégradée à cause de perturbations sur le trajet de l'onde provenant de l'objet observé.

Les aberrations corrigées par l'optique active viennent de l'instrument lui-même : configuration des éléments les uns par rapports aux autres (différence de chemin optique ou angle d'incidence par exemple), forme imparfaite des optiques, déformations des surfaces optiques sous leurs propres poids ou par dilatation thermique.

Pour s'affranchir de tels défauts, des systèmes de compensation ont été développés.

Tels que connus, ces systèmes comportent un miroir déformable dont la déformation est contrôlée en fonction des aberrations présentes dans l'instrument. Les différentes technologies utilisées sont les suivantes : miroir déformable ajusté avec des actionneurs piézoélectriques positionnés sous la surface du miroir, miroir déformé par des pistons magnétiques, micro miroir electro-mécanique, modulateur d'amplitude ou miroir liquide.

Les systèmes de déformations les plus utilisés font entrer en jeu des actionneurs, intégrés entre la surface du miroir et une plaque support. Un appareil de mesure analyse la déformation du front d'onde et envoie une commande aux actionneurs qui vont appliquer un déplacement sous la surface optique pour corriger le front d'onde.

Les problèmes majeurs de cette technique viennent de la localisation des actionneurs directement sous la surface optique.

Premièrement, le fait d'appuyer directement sous le miroir va générer des défauts hautes fréquences (effets d'empreintes).

Deuxièmement, la précision de la déformation est directement liée au nombre d'actionneurs : il faut un échantillonnage suffisant par rapport à la déformation voulue.

Ainsi, plus la surface du miroir sera grande, plus il faudra d'actionneurs, mais la densité d'actionneur est limitée par leur encombrement.

Pour éviter l'apparition de défauts hautes fréquences, des systèmes de déformations de miroirs ont été conçus de telle sorte à appliquer des forces et des moments autour de la surface optique. Dans un tel cas, le nombre d'actionneurs ne dépend plus de la taille du miroir, seulement des aberrations à corriger. Il est également possible d'appliquer une pression sous la surface, la déformation sera ainsi continue.

Tous ces systèmes de correction peuvent être complexes à mettre en oeuvre : commande des actionneurs, nombreuses pièces mécaniques...

En outre, les systèmes de déformations de miroirs utilisés pour la correction active de front d'onde peuvent également être utilisés pour la fabrication de miroirs asphériques par polissage sous contraintes.

En effet, un miroir asphérique est constitué d'une sphère (facilement réalisable) plus une combinaison d'aberrations optiques. Le polissage sous contraintes consiste à déformer un miroir selon la forme finale voulue, le polir sphérique avec un outil pleine taille (pour éviter les défauts hautes fréquences) puis relâcher les contraintes : le miroir prendra ainsi la forme asphérique voulue. Cette technique permet d'obtenir des surfaces asphériques (par exemple des paraboles hors-axe) d'excellente qualité.

Il existe ici un besoin pour simplifier les systèmes de déformations ce qui permet de simplifier la mise en oeuvre du polissage sous contrainte (notamment si le système de déformation est constitué de peu de pièces mécaniques).

Ainsi au vu des problèmes ci-dessus identifiés les miroirs déformables utilisés actuellement pour corriger les aberrations optiques comportent un nombre importants d'actionneurs ce qui complexifie la mise en oeuvre des systèmes et l'application des forces directement sur la surface optique qui génèrent des défauts d'ordres supérieurs. WO 2009/097503 A1 divulgue un dispositif pour corriger au moins une aberration optique selon le preambule de la revendication 1.

PRESENTATION DE L'INVENTION

L'invention permet de pallier les inconvénients précités.

Ainsi, selon un premier aspect, l'invention concerne un dispositif selon la revendication 1. Du fait de la connaissance des aberrations à corriger dans le système optique, il est possible de choisir une géométrie particulière du système adaptée à la correction de ces aberrations.

En outre, il est possible par l'application seulement d'une force de générer un moment de flexion sur les bords du miroir pour corriger ces aberrations.

D'autres aspects du dispositif sont les suivants :

- la fonction composite est définie dans un repère en coordonnées cylindriques $F_O = \left( O, \vec{x}_O, \vec{y}_O, \vec{z}_O \right)$ attaché au miroir, d'origine $O$ le centre de symétrie du miroir et avec $\vec{z}_O$ un vecteur parallèle à l'axe optique du miroir le contour étant tel que la fonction composite est nulle selon l'axe z ;
- le contour est choisi parmi le groupe suivant : circulaire si la fonction composite est composée d'un focus ; elliptique si la fonction composite est composée d'un focus et d'un astigmatisme ; une forme définie par la résolution de la fonction composite composée d'un focus et d'une ou plusieurs autre(s) aberration(s) ;
- les moyens pour déformer le miroir sont constitués par une plaque intermédiaire ayant un contour identique à celui du miroir ; un unique actionneur appliquant une force F d'intensité donnée sur la plaque intermédiaire ; un anneau disposé au dessus de la plaque intermédiaire, le miroir étant disposé sur l'anneau ;
- l'unique actionneur est positionné pour appliquer la force F au centre de la plaque intermédiaire ;
- le miroir déformable est à épaisseur variable ;
- la plaque intermédiaire présente un bord à épaisseur variable ;
- le miroir est constitué de verre et/ou métal.

Selon un second aspect, l'invention concerne un système optique destiné à générer au moins une aberration optique connue sur un front d'onde à l'aide d'un dispositif de correction selon le premier aspect de l'invention.

Et selon un troisième aspect, l'invention concerne l'utilisation du dispositif de déformation selon le premier aspect de l'invention pour le polissage sous contraintes permettant de générer des miroirs asphériques complexes bénéficiant de l'excellente qualité des miroirs sphériques super-polis par outil pleine taille (moins de 10 nm rms d'erreur de forme, moins de 3 nm rms de défauts locaux et moins de 0,5 nm rms de rugosité).

PRESENTATION DES FIGURES

D'autres caractéristiques et avantages de l'invention ressortiront encore de la description qui suit laquelle est purement illustrative et non limitative et doit être lue en regard des dessins annexés sur lesquels

- la figure 1 illustre schématiquement un dispositif de correction d'au moins une aberration ;
- la figure 2 illustre schématiquement un dispositif de correction d'au moins une aberration conforme à un mode de réalisation de l'invention ;
- la figure 3 illustre un exemple d'utilisation du dispositif de correction d'au moins une aberration conforme à l'invention dans un système optique ;
- les figures 4a à 4f illustrent des contours pour différentes combinaisons d'aberrations ;
- les figures 5a à 5c illustrent un exemple d'utilisation du dispositif selon l'invention pour générer une combinaison d'aberrations particulière.

DESCRIPTION DETAILLEE DE L'INVENTION

*Description générale du dispositif*

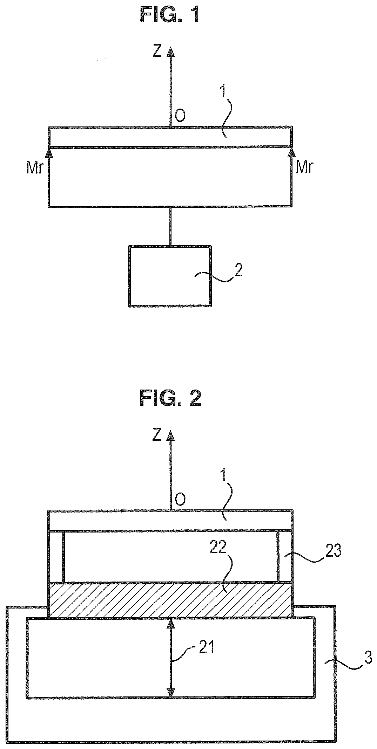

Les figures 1 et 2 illustrent un dispositif pour corriger au moins une aberration optique. Un tel dispositif trouve son application dans des instruments optiques où les aberrations optiques évoluent de manière connue.

On précise que l'on entend par évolution connue le fait qu'en fonction de l'instrument optique l'évolution de l'aberration est déterminée à l'avance.

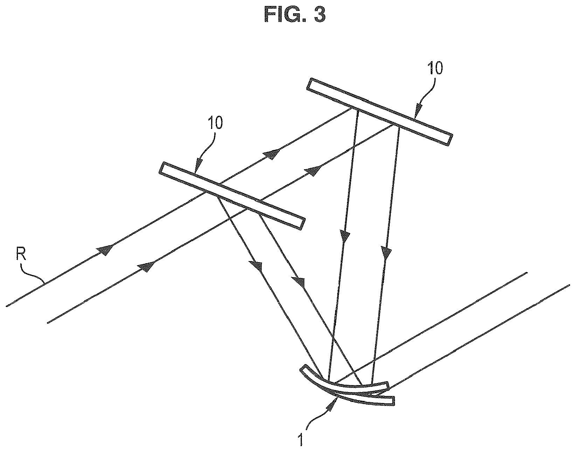

Un exemple de l'utilisation d'un dispositif pour corriger au moins une aberration optique tel qu'illustré schématiquement sur les figures 1 et 2 est illustré à la figure 3.

Un rayon R lumineux arrive avec un angle d'incidence non nul sur un miroir 10 de renvoi, générant ainsi des défauts dans le front d'onde (représenté en pointillés sur la figure 3) qui peuvent être compensés plus loin avec un miroir 1 correcteur ; si la position du miroir 10 varie (entre les deux positions illustrées sur la figure 3), les aberrations à compenser vont également varier et la forme du miroir 1 doit suivre cette évolution pour corriger au mieux le front d'onde.

Le dispositif correcteur, présenté sur la figure 1, comprend un miroir 1 déformable ayant un contour et des moyens 2 pour déformer le miroir en lui appliquant des moments de flexion sur ses bords.

Le miroir déformable est à géométrie adaptée de manière telle que le contour du miroir 1 est défini à partir d'une fonction composite des aberrations à corriger.

On précise ici que l'on entend par fonction composite des aberrations à corriger, la somme des modes optiques considérés. En effet, l'erreur sur le front d'onde, et donc la forme du miroir, z, peut être exprimée dans le repère polaire $(\rho,\theta)$, comme une somme pondérée d'aberrations optiques, $Z_i$ :

$$z(\rho,\theta) = \sum a_i Z_i(\rho,\theta)$$

Les moyens 2 pour déformer le miroir sont adaptés pour appliquer un moment de flexion Mr sur les bords du miroir 1 à l'aide de l'application d'une force. Le miroir déformable est concave ou convexe quand il est déformé.

Le dispositif est fondé sur l'hypothèse selon laquelle la ou les aberration(s) à corriger sont d'évolutions connues et sur l'hypothèse selon laquelle le moment de flexion peut faire varier la courbure de la surface optique du miroir 1.

Par exemple, dans le cas d'une aberration du type Focus, la courbure du miroir est la même selon toute les directions.

Il est bien entendu possible de générer une courbure variant avec l'orientation du miroir, dans ce cas, des modes optiques d'ordres supérieurs sont générés.

En effet, une plaque mince circulaire, ici le miroir 1, peut être déformé en courbure (Focus) en appliquant une répartition de moment uniforme sur ses bords.

De cette manière en combinant un contour particulier pour le miroir 1 avec une distribution de moments particulière il est possible de corriger au moins une aberration connue (ici un Focus).

On obtient alors un dispositif spécialement prévu pour compenser au moins une aberration, d'évolution connue, par la seule application d'une force générant des moments sur les bords du miroir.

Le miroir peut être plan, concave ou convexe, il peut être constitué de verre ou de métal. Son épaisseur dépendra de l'amplitude de la déformation voulue et de la force disponible. Classiquement le miroir présente une épaisseur de quelques millimètres, typiquement entre 2 et 10 mm.

Le système de déformation est métallique, il peut être à épaisseur variable, autour de quelques dizaines de millimètres.

*Contour*

Le contour du miroir est déduit d'une fonction composite d'au moins une aberration.

La fonction composite est définie dans un repère en coordonnées cylindriques $F_O = \left(O, \vec{x}_O, \vec{y}_O, \vec{z}_O\right)$ attaché au miroir 1, d'origine O le centre de symétrie du miroir et $\vec{z}_O$ un vecteur parallèle à l'axe optique du miroir.

En particulier le contour du miroir est tel que la fonction composite est nulle selon l'axe z.

A titre d'exemple, un contour elliptique du miroir 1 permet de générer une modulation des moments transmis au bord correspondant à une déformation en Focus et Astigmatisme.

La fonction composite s'exprime dans ce cas par

$$z(\rho,\theta) = a_{Foc}(2\rho^2 - 1) + a_{Ast}\rho^2\cos(2\theta),$$

avec z la déformation de la surface optique, $(\rho,\theta)$ les coordonnées dans le repère polaire ci-dessus défini et $a_{Foc}$ et $a_{Ast}$ les amplitudes des aberrations considérées

Avec l'hypothèse selon laquelle les bords du miroir 1 sont fixes on obtient l'expression du contour, c'est-à-dire du rayon au bord, $\rho_b$ en fonction de l'angle $\theta$, qui correspond à l'équation d'une ellipse :

$$z(\rho_b,\theta) = 0 \quad => \quad \rho_b(\theta) = \left(2 + \frac{a_{Ast}}{a_{Foc}}\cos(2\theta)\right)^{-1/2},$$

avec les mêmes notations que précédemment.

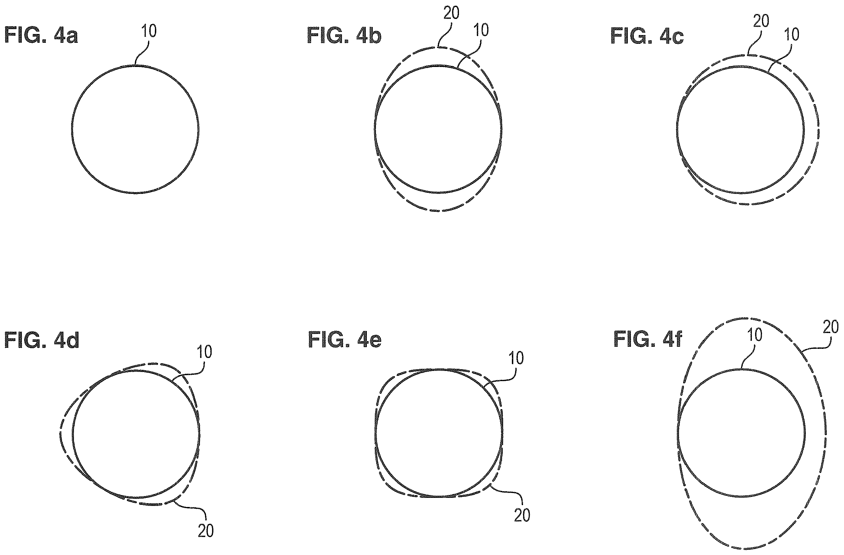

On a illustré sur les figures 4a à 4f différents contours correspondant à différentes fonctions composites, la courbe 10 correspond à une fonction composite dépendant d'un Focus seul, tandis que la courbe 20 correspond à une fonction composite dépendant d'un Focus plus une ou plusieurs autre(s) aberration(s) comme cela est détaillé ci-dessous.

Sur la figure 4a le contour correspond à une fonction composite dépendant d'un Focus seul

Sur la figure 4b le contour correspond à une fonction composite dépendant d'un Focus et d'un Astigmatisme.

Sur la figure 4c le contour correspond à une fonction composite dépendant d'un Focus et d'une Coma.

Sur la figure 4d le contour correspond à une fonction composite dépendant d'un Focus et d'un Trefoil.

Sur la figure 4e le contour correspond à une fonction composite dépendant d'un Focus et d'un Tetrafoil.

Sur la figure 4f le contour correspond à une fonction composite dépendant d'un Focus, d'un Astigmatisme, d'une Coma et d'un Tilt.

*Système de déformation*

Selon un mode de réalisation particulier, illustré sur la figure 2, les moyens 2 pour déformer le miroir sont constitués par :

- une plaque 22 intermédiaire ayant un contour identique à celui du miroir 1 déformable ;
- un unique actionneur 21 appliquant une force F d'intensité donnée sur la plaque 22 intermédiaire ;
- un anneau 23 reliant la plaque intermédiaire au miroir (l'anneau est disposé au dessus de la plaque intermédiaire, le miroir étant disposé sur l'anneau).

Cette configuration des moyens 2 de déformation permet de créer un moment de flexion sur les bords de la plaque 22 intermédiaire par l'application d'une force F en son centre.

En reliant le miroir à la plaque intermédiaire, via un anneau 23, le moment nécessaire est transmis au miroir et ce dernier est déformé.

L'ensemble miroir plus système de déformation est maintenu par un système d'attache 3.

Ainsi, la génération du moment de force au bord du miroir 1 est simple et peu complexe. Elle ne nécessite qu'un faible nombre de pièces mécaniques.

De manière avantageuse l'épaisseur de la plaque intermédiaire 22 est du même ordre de grandeur que l'épaisseur du miroir et l'épaisseur de l'anneau 23 est plus grande (typiquement l'anneau est 1,5 à 5 fois plus épais que le miroir). L'ensemble du système de déformation est en métal. Ces caractéristiques dépendent de l'amplitude de la déformation voulue et seront à définir selon la rigidité nécessaire.

L'actionneur 21 peut être piézoélectrique ou de tout autre type permettant l'application d'une force sur la plaque intermédiaire.

Pour améliorer la qualité de la déformation du miroir et par conséquent la précision de la correction de la ou les aberration(s) la plaque intermédiaire 22 peut être optimisée.

En particulier on peut ajouter une distribution d'épaisseur à la plaque intermédiaire, calculée pour transmettre exactement les moments nécessaires.

Une telle distribution sera angulaire : l'épaisseur au bord de la plaque intermédiaire dépend de l'angle $\theta$.

Une telle distribution d'épaisseur peut être obtenue de la manière suivante.

Le moment de flexion au bord du miroir est directement donné par sa déformation, z :

$$M_{r,b}(\theta) = -D\left(\frac{\partial^2 z(r_b,\theta)}{\partial r_b(\theta)^2} + \nu\left(\frac{1}{r_b(\theta)}\frac{\partial z(r_b,\theta)}{\partial r_b(\theta)} + \frac{1}{r_b(\theta)^2}\frac{\partial^2 z(r_b,\theta)}{\partial \theta^2}\right)\right)$$

avec $r_b$ le rayon au bord, donné par l'équation du contour, dépendant de $\theta$

D est la rigidité du matériau de la plaque intermédiaire définie par

$$D = \frac{E\,t^3}{12(1-\nu^2)}$$

avec E le module d'Young du matériau, $\nu$ le coefficient de Poisson du matériau, et t l'épaisseur du miroir.

Or, une force centrale, F, est appliquée sur la plaque intermédiaire, créant un moment au bord de la plaque qui est transmis au bord du miroir :

$$M_{r,b}(\theta) = F\,\rho_b(\theta) = F\frac{r_b(\theta)}{a}$$

En égalisant les deux expressions, on obtient, pour une déformation donnée, une relation entre épaisseur et rayon au bord de la plaque intermédiaire :

$$t_b(\theta) = \left[ \frac{12\,(1-\nu^2)F}{E}\,\frac{r_b(\theta)}{a}\left( \frac{\partial^2 z(r_b,\theta)}{\partial r_b(\theta)^2} + \nu\left( \frac{1}{r_b(\theta)}\frac{\partial z(r_b,\theta)}{\partial r_b(\theta)} + \frac{1}{r_b(\theta)^2}\frac{\partial^2 z(r_b,\theta)}{\partial\theta^2}\right) \right)^{-1} \right]^{1/3}$$

Ainsi, pour une déformation et un contour donnés, la distribution d'épaisseur au bord de la plaque intermédiaire 22 permettant de générer les moments nécessaires peut être calculée.

*Décentrage de la force*

Toujours pour améliorer la qualité de la déformation du miroir on peut également déplacer le point d'application de la force sur la plaque intermédiaire.

En effet, le moment transmis dépend de la distance entre le lieu d'application de la force et le bord de la plaque intermédiaire.

A titre d'exemple les aberrations Tip/Tilt et Coma peuvent être générées en décalant la position de l'actionneur par rapport au centre.

Pour une force F décalée de $(x_d, y_d)$ par rapport au centre on aura donc une nouvelle modulation du moment induit :

$$M_{r,b}(\theta) = Fr_b{'}(\theta) = F\sqrt{r_b(\theta)^2 + x_d{}^2 + y_d{}^2 - 2r_b(\theta)(x_d\cos(\theta) + y_d\sin(\theta))}$$

Avec $r_b(\theta)$ la distance entre le centre et le bord de la plaque et $r'_b(\theta)$ la distance entre le lieu d'application de la force F et le bord de la plaque.

L'apparition des termes en $\cos(\theta)$ et $\sin(\theta)$ dans l'expression du moment correspond aux termes de Tip/Tilt et de Coma. Ainsi, en décalant simplement la force sur le système, la génération de ces modes peut être ajoutée, leurs amplitudes dépendant de la distance de décalage.

Afin de ne pas dégrader la qualité des autres modes voulus, la distribution d'épaisseur peut être recalculée, de la même façon que précédemment en prenant en compte la nouvelle expression du moment (*Frb'(θ)* plutôt que *Frb(θ)*).

En décentrant la force sur un système elliptique et en modifiant la distribution d'épaisseur, du Tilt et de la Coma sont ajoutés à la déformation du miroir. La précision de génération est excellente : autour de 0,4 %.

En conséquence, en fonction de la précision exigée pour la correction on dispose d'un dispositif comportant plusieurs paramètres géométriques pour définir la déformation du miroir.

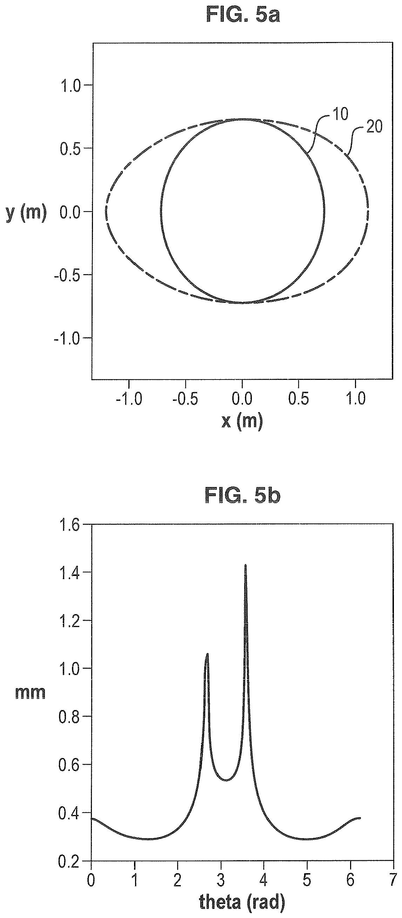

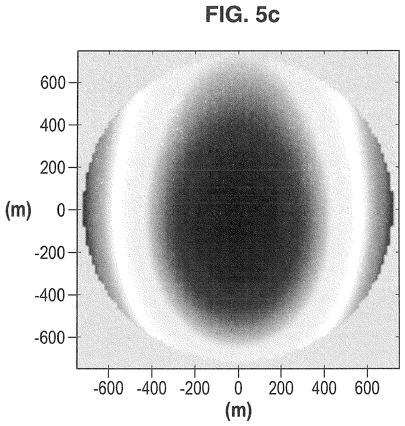

Les figures 5a à 5c illustrent un exemple d'application. Le contour du miroir et de la plaque intermédiaire possèdent un contour 20 et la plaque intermédiaire a une distribution d'épaisseur telle qu'illustrée sur la figure 5b.. L'application d'une force, via un actionneur, au centre de la plaque intermédiaire permet de déformer la surface optique circulaire selon une somme de Focus, Astigmatisme et Coma. La figure 5c illustre la déformation obtenue. Sur cette figure plus on s'éloigne du bord moins le miroir est déformé.

Un tel dispositif peut être, par exemple, intégré dans un interféromètre pour corriger des aberrations non communes entre les deux voies de l'interféromètre. On peut également coupler ce système de déformation à la technique de polissage sous contraintes pour obtenir des miroirs asphériques de très bonne qualité optique.

**Revendications**

**1.**  Dispositif pour corriger au moins une aberration optique, d'évolution connue d'un système optique, le dispositif comprenant :

 - un miroir (1) déformable ayant un contour et une géométrie adaptée de manière telle que le contour dudit miroir est défini à partir d'une fonction composite de ladite aberration optique à corriger et
 - des moyens (2) pour déformer le miroir comprenant un anneau (23) et un unique actionneur (21), ledit miroir déformable étant concave ou convexe quand il est déformé

 **caractérise en ce que**
 lesdites moyens (2) pour déformer le miroir sont constitués par

 - une plaque (22) intermédiaire ayant un contour identique à celui du miroir (1) ;

- ledit unique actionneur (21) disposé au-dessous de la plaque intermédiaire et configuré pour appliquer une force F d'intensité donnée par-dessous la plaque intermédiaire ;
- ledit anneau (23) disposé au-dessus de la plaque intermédiaire, le miroir étant disposé sur l'anneau, la plaque intermédiaire étant connectée au miroir déformable au moyen de l'anneau, la plaque intermédiaire étant configurée pour appliquer par l'intermédiaire de l'anneau un moment de flexion sur les bords du miroir.

2. Dispositif selon la revendication 1 dans lequel la fonction composite est définie dans un repère en coordonnées cylindriques $F_O = \left(O, \vec{x}_O, \vec{y}_O, \vec{z}_O\right)$ attaché au miroir (1), d'origine O le centre de symétrie du miroir et avec $\vec{z}_O$ un vecteur parallèle à l'axe optique du miroir le contour étant tel que la fonction composite est nulle selon l'axe z.

3. Dispositif selon la revendication précédente, dans lequel le contour est choisi parmi le groupe suivant :

   - circulaire si la fonction composite est composée d'un focus ;
   - elliptique si la fonction composite est composée d'un focus et d'un astigmatisme ;
   - une forme définie par la résolution de la fonction composite composée d'un focus et d'une ou plusieurs autre(s) aberration(s).

4. Dispositif selon la revendication précédente, dans lequel l'unique actionneur est positionné pour appliquer la force F au centre de la plaque intermédiaire.

5. Dispositif selon l'une des revendications précédentes, dans lequel le miroir déformable est à épaisseur variable.

6. Dispositif selon l'une des revendications 1 à 5, dans lequel la plaque intermédiaire présente un bord à épaisseur variable.

7. Dispositif selon l'une des revendications précédentes, dans lequel le miroir est constitué de verre et/ou métal.

8. Système d'observation optique destiné à générer au moins une aberration optique connue sur un front d'onde comprenant un dispositif de correction selon l'une des revendications précé6dentes.

9. Utilisation du dispositif de déformation selon l'une des revendications 1 à 7, pour le polissage sous contraintes permettant de générer des miroirs présentant moins de 10 nm rms d'erreur de forme, moins de 3 nm rms de défauts locaux et moins de 0,5 nm rms de rugosité.

**Patentansprüche**

1. Vorrichtung zum Korrigieren von wenigstens einer optischen Aberration mit bekannter Entwicklung eines optischen Systems, wobei die Vorrichtung umfasst:

   - einen verformbaren Spiegel (1), der eine Kontur und eine Geometrie besitzt, die derart angepasst ist, dass die Kontur des Spiegels anhand einer verketteten Funktion der zu korrigierenden optischen Aberration definiert ist, und
   - Mittel (2) zum Verformen des Spiegels, die einen Ring (23) und einen einzigen Aktor (21) umfassen, wobei der verformbare Spiegel konkav oder konvex ist, wenn er verformt ist,

   **dadurch gekennzeichnet,**
   **dass** die Mittel (2) zum Verformen des Spiegels bestehen aus

   - einer Zwischenscheibe (22), die eine Kontur besitzt, die mit jener des Spiegels (1) identisch ist;
   - dem einzigen Aktor (21), der unterhalb der Zwischenscheibe angeordnet und dazu eingerichtet ist, eine Kraft F einer gegebenen Stärke von unterhalb der Zwischenscheibe anzulegen;
   - dem Ring (23), der oberhalb der Zwischenscheibe angeordnet ist, wobei der Spiegel auf dem Ring angeordnet ist, wobei die Zwischenscheibe mithilfe des Rings mit dem verformbaren Spiegel verbunden ist, wobei die Zwischenscheibe dazu eingerichtet ist, mithilfe des Rings ein Biegemoment an die Ränder des Spiegels anzulegen.

**2.** Vorrichtung nach Anspruch 1, wobei die verkettete Funktion in einem Zylinderkoordinatensystem $F_O = (O, \vec{x}_O, \vec{y}_O, \vec{z}_O)$ definiert ist, das mit dem Spiegel (1) verknüpft ist, wobei der Ursprung O das Symmetriezentrum des Spiegels und $\vec{z}_O$ ein zur optischen Achse des Spiegels paralleler Vektor ist, wobei die Kontur derart ist, dass die verkettete Funktion in Richtung der Achse z Null ist.

**3.** Vorrichtung nach dem vorhergehenden Anspruch, wobei die Kontur aus der folgenden Gruppe ausgewählt ist:

- kreisförmig, wenn die verkettete Funktion aus einem Fokus zusammengesetzt ist;
- ellipsenförmig, wenn die verkettete Funktion aus einem Fokus und einem Astigmatismus zusammengesetzt ist;
- einer Form, die durch die Auflösung der verketteten Funktion definiert ist, die aus einem Fokus und einer oder mehreren weiteren Aberration(en) zusammengesetzt ist.

**4.** Vorrichtung nach dem vorhergehenden Anspruch, wobei der einzige Aktor dazu positionniert ist, die Kraft F im Zentrum der Zwischenscheibe anzulegen.

**5.** Vorrichtung nach einem der vorhergehenden Ansprüche, wobei der verformbare Spiegel von veränderlicher Dicke ist.

**6.** Vorrichtung nach einem der Ansprüche 1 bis 5, wobei die Zwischenscheibe einen Rand von veränderlicher Dicke aufweist.

**7.** Vorrichtung nach einem der vorhergehenden Ansprüche, wobei der Spiegel aus Glas und/oder Metall besteht.

**8.** Optisches Beobachtungssystem, das dafür vorgesehen ist, wenigstens eine bekannte optische Aberration auf einer Wellenfront zu erzeugen, umfassend eine Korrekturvorrichtung nach einem der vorhergehenden Ansprüche.

**9.** Verwendung der Verformungsvorrichtung nach einem der Ansprüche 1 bis 7 zum Polieren unter Spannung, das es ermöglicht, Spiegel zu erzeugen, die weniger als 10 nm rms Formabweichung, weniger als 3 nm rms lokale Abweichungen und weniger als 0,5 nm rms Rauheit aufweisen.

**Claims**

**1.** Device for correcting at least one optical aberration with known evolution of an optical system, the device comprising:

- a deformable mirror (1) having a contour and an adapted geometry such that the contour of said mirror is defined based on a composite function of said optical aberration to be corrected and
- means (2) for deforming the mirror comprising a ring (23) and a single actuator (21), said deformable mirror being concave or convex when it is deformed **characterised in that** said means (2) for deforming the mirror are constituted from:
- an intermediate plate (22) having a contour that is identical to that of the mirror (1);
- said single actuator (21) positioned under the intermediate plate and configured so as to apply a force F of a given intensity underneath the intermediate plate;
- said ring (23) positioned above the intermediate plate, the mirror being positioned on the ring, the intermediate plate being connected to the deformable mirror via the ring, the intermediate plate being configured so as to apply, via the ring, a bending moment on the edges of the mirror.

**2.** Device according to claim 1, wherein the composite function is defined in a cylindrical coordinate system $F_O = (O, \vec{x}_O, \vec{y}_O, \vec{z}_O)$ attached to the mirror (1), with origin $0$ as the centre of symmetry of the mirror and where $\vec{z}_O$ is a vector parallel to the optical axis of the mirror, the contour being such that the composite function is zero along the axis z.

**3.** Device according to the previous claim, wherein the contour is selected from the following group:

- a circular contour if the composite function is composed of a focus;
- an elliptical contour if the composite function is composed of a focus and an astigmatism;
- a contour shape defined by the resolution of the composite function composed of a focus and of one or more other aberrations.

4. Device according to the previous claim, wherein the single actuator is positioned so as to apply the force F at the centre of the intermediate plate.

5. Device according to one of the previous claims, wherein the thickness of the deformable mirror is variable.

6. Device according to one of claims 1 to 5, wherein the intermediate plate has an edge, the thickness of which is variable.

7. Device according to one of the previous claims, wherein the mirror is constituted from glass and/or metal.

8. Optical observation system intended to generate at least one known optical aberration on a wavefront comprising a correction device according to one of the previous claims.

9. Use of the deformation device according to one of claims 1 to 7 for stress polishing allowing for the generation of mirrors having less than 10 nm rms of form error, less than 3 nm rms of local defects and less than 0.5 nm rms of roughness.

## FIG. 1

## FIG. 2

## FIG. 3

FIG. 4a

FIG. 4b

FIG. 4c

FIG. 4d

FIG. 4e

FIG. 4f

## FIG. 5a

## FIG. 5b

FIG. 5c

**EP 2 515 155 B1**

## RÉFÉRENCES CITÉES DANS LA DESCRIPTION

**Documents brevets cités dans la description**

- WO 2009097503 A1